# EUROPEAN PATENT APPLICATION

(11) **EP 2 109 230 A1**
(43) Date of publication of application: **14.10.2009**
(21) Application number: 08445017.0
(22) Date of filing: 07.04.2008
(51) Int. Cl.: H04B 7/08, H01Q 1/24, H01Q 21/29, H01Q 21/28

(54) **An antenna device having receiver diversity and a portable radio communication device comprising such an antenna device**

(71) Applicant: Laird Technologies AB, 164 22 Kista (SE)
(72) Inventor: Braun, Christian, 18647 Vallentuna (SE); Kaikkonen, Andrei, 17548 Järfälla (SE); Lindberg, Peter, 752 29 Uppsala (SE)
(74) Representative: Fritzon, Rolf

(57) **Abstract**

The present invention relates to an antenna device for a portable radio communication device (20), wherein the antenna device comprises a main radiating element (1) and a diversity radiating element (2). The main antenna radiating element (1) is configured to be positioned in a first position and the diversity radiating element (2) is configured to be positioned in a second position of the portable radio communication device (20), wherein a user unlikely positions his fingers at the first and second positions at the same time.

## Description

### FIELD OF INVENTION

The present invention relates generally to antennas, and particularly to an antenna device for a portable radio communication device, having receiver diversity.

### BACKGROUND

The market for portable radio communication devices, such as mobile phones, PDA, portable computers and similar devices, is today very competitive, which puts tough demands on the manufacturers. Furthermore, antennas of such devices many times only have access to limited space of different shapes.

### SUMMARY OF THE INVENTION

An object of the present invention is thus to provide an antenna device for a portable radio communication device which efficiently utilizes available space in a portable radio communication device.

This object, among others, is according to the present invention attained by an antenna device and a portable radio communication device, respectively, as defined by the appended claims.

By providing an antenna device, for a portable radio communication device, comprising a main radiating element and a diversity radiating element, wherein the main antenna radiating element is configured to be positioned in a first position and said diversity radiating element is configured to be positioned in a second position of the portable radio communication device, wherein a user unlikely positions his fingers at the first and second positions at the same time, the radiating elements can be made smaller compared to traditional radiating elements since an antenna device can be utilized much more efficiently when not covered by a finger or other part of the hand.

To further utilize available space as efficiently as possible the first position and the second position are in the same half of the portable radio communication device.

By preferably having the first position along a top edge of the portable radio communication device and the second position along a side edge of portable radio communication device, it is unlikely that both radiating elements are covered by a hand at the same time.

The more sensitive part of the antenna device is usually the receiving function, which preferably is utilized such that the main radiating element is tuned to a transmitting frequency band of the antenna device and is tuned to part of a receiving frequency band of the antenna device corresponding to the transmitting frequency band, and that the diversity radiating element is tuned to part of the receiving frequency band. By having a transmitting antenna element and diversity reception utilizing partly the transmitting antenna element and a diversity receiving element the total antenna size is smaller, or could alternatively be made more efficient, than an original antenna.

Preferably, the part of the receiving frequency band of the main radiating element and the part of the receiving frequency band of the diversity radiating element are distinct apart in the receiving frequency band of the antenna device, to allow the provision of even smaller sized radiating elements. The part of a receiving frequency band of the main radiating element is preferably closer to the transmitting frequency band compared to the part of the receiving frequency band of the diversity radiating element, whereby performance can be improved. Further, even when the part of a receiving frequency band of the main radiating element and the part of the receiving frequency band of the diversity radiating element are distinct apart and they together constitute not fully the receiving frequency band of the antenna device the size of the antenna device can be reduced compared to an original antenna.

To allow yet smaller sized radiating elements the main radiating element is preferably tuned such that it is centered to the specific Tx channel in the transmitting frequency band of the antenna device, which tuning preferably is arranged to be adaptively performed.

The main radiating element and the diversity radiating element are preferably distanced from each other by at least 10 mm and at most 30 mm, further preferably distanced from each other by at least 10 mm and at most 20 mm, and yet further preferably distanced from each other by approximately 15 mm. The radiating elements should be positioned as closes to each other as possible to occupy as little space as possible in the portable radio communication device as possible, but at the same time they should be distanced from each other such that a hand holding the portable radio communication device not influences both radiating elements at the same time, wherein a fingers breadth is about 10 mm.

The matching specification in band can be typically -6 dB, both for the Tx band and for the Rx band. A matching of -6 dB means that about 1.2 dB power is lost due to mismatch losses. With the matching diversity feature according to the present invention, the matching requirement for the Rx band can be significantly relaxed.

There exists several diversity combining techniques. The preferred one to be used in an antenna device according to the present invention is Maximum Ratio Combining (MRC), where each antenna branch is scaled with an amplitude and phase in order to maximize the resulting Signal-to-noise ratio (SNR). As shown in Jakes, W. C. "Microwave Mobile Communications", AT&T IMP Corp, 1974, IEEE press reissue, equation 5.2-12, with the correct scaling, the resulting SNR is the sum of the incoming SNR:s. Assuming that the main and diversity antennas have the same radiation efficiencies, the difference in performance is defined by the mismatch loss as described above.

If the matching of an antenna is -3dB, about 3dB is lost in mismatch loss, i.e. half of the power is reflected, half is transferred to the receiver. Using two antennas in the MRC diversity system, each having -3dB matching, the resulting SNR would be the same as of an ideal matched antenna.

From the above, it can be understood that also an antenna with poor matching can contribute and improve the Rx performance of the antenna system.

Note that the above reasoning holds for antennas receiving fully correlated signals, e.g. in an anechoic chamber which is useful for type approval testing in the lab. The preferred way to utilize antenna diversity is to design the antennas to receive uncorrelated signals in a multi-path environment. In this case, the diversity gain would be even larger than described above.

Further features and advantages of the present invention will be evident from the following description.

### BRIEF DESCRIPTION OF THE DRAWINGS

The present invention will become more fully understood from the detailed description of embodiments given below and the accompanying figures, which are given by way of illustration only, and thus, are not limitative of the present invention, wherein:
Fig. 1 schematically illustrates functionality of a first embodiment of the present invention.
Fig. 2 shows a diagram of the reflection coefficient for an antenna device according to the first embodiment of the present invention.
Fig. 3 schematically illustrates positioning of radiating elements in a portable radio communication device according to the first embodiment of the present invention.
Fig. 4 schematically illustrates functionality of a second embodiment of the present invention.
Fig. 5 shows a diagram of the reflection coefficient for an antenna device according to the second embodiment of the present invention.
Fig. 6 schematically illustrates positioning of radiating elements in a portable radio communication device according to the second embodiment of the present invention.
Fig. 7 schematically illustrates functionality of a third embodiment of the present invention.
Fig. 8 shows a diagram of the reflection coefficient for an antenna device according to the third embodiment of the present invention.
Fig. 9 schematically illustrates positioning of radiating elements in a portable radio communication device according to the third embodiment of the present invention.

### DETAILED DESCRIPTION OF EMBODIMENTS

In the following description, for purpose of explanation and not limitation, specific details are set forth, such as particular techniques and applications in order to provide a thorough understanding of the present invention. However, it will be apparent for a person skilled in the art that the present invention may be practiced in other embodiments that depart from these specific details. In other instances, detailed description of well-known methods and apparatuses are omitted so as not to obscure the description of the present invention with unnecessary details.

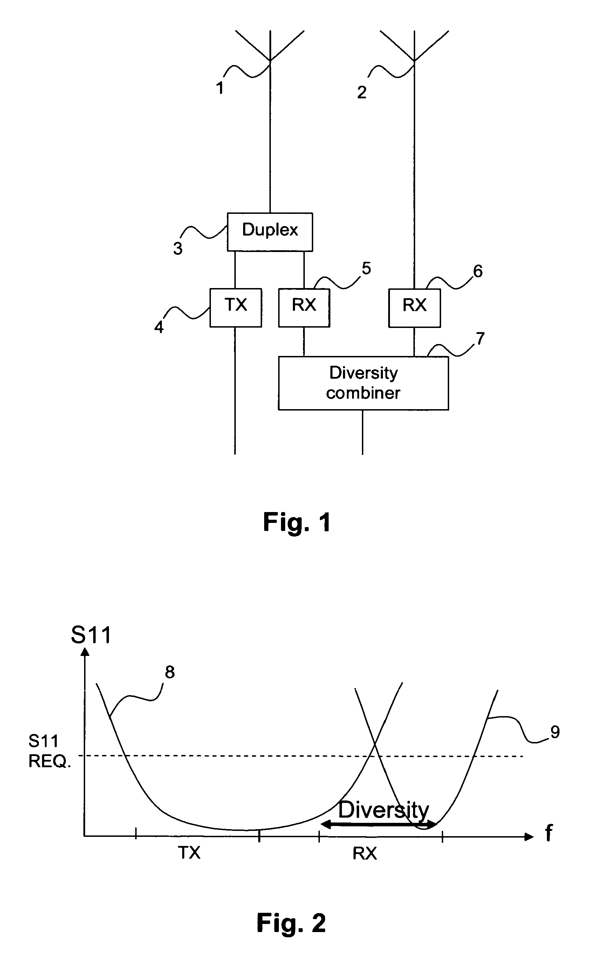

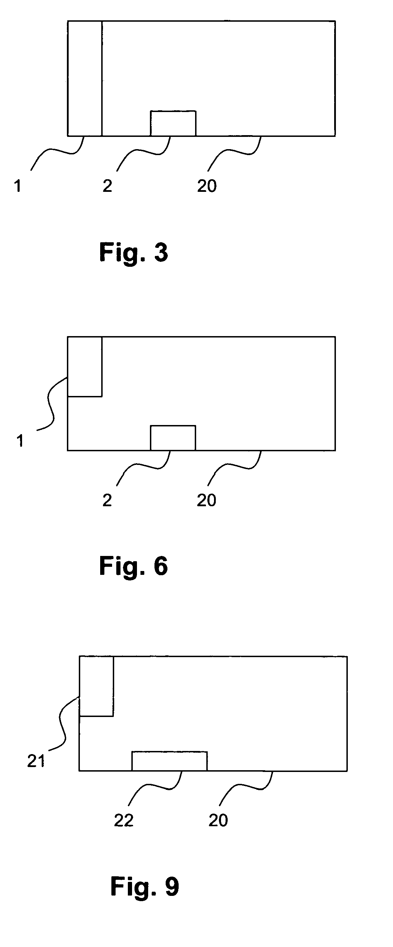

A first embodiment of the present invention will now be described with reference to Figs. 1-3.

An antenna device for a portable radio communication device 20, such as a mobile phone, a PDA, a portable computer and similar devices, comprises a main radiating element 1 and a diversity radiating element 2. The main radiating element is arranged in a first position of the portable radio communication device, such as at the top edge thereof. The diversity radiating element 2 is arranged in a second position of the portable radio communication device, such as at the side edge thereof. The diversity radiating element 2 is preferably positioned relatively near the main radiating element 1 in the portable radio communication device 20, such as at the same half of the portable radio communication device instead of opposing parts thereof. This positioning gets the following advantages. By being positioned closer to RF circuits, that are typically placed in one shielded area of the portable radio communication device, there is no need for long RF transmission lines on the printed circuit board of the portable radio communication device. Also, metal covers can be used at all places where there is no antenna, and with both main antenna and diversity antenna in a tight area a larger portion of the portable radio communication device can be provided with a metal cover.

The main radiating element 1 and the diversity radiating element 2 are distance from each other by at least 10 mm and at most 30 mm, preferably distanced from each other by at least 10 mm and at most 20 mm, or distanced from each other by approximately 15 mm. By distancing the main radiating element 1 and the diversity radiating element 2 from each other it becomes unlikely that a hand holding the portable radio communication device will be positioned over both elements at the same time, which highly reduces the efficiency of the antenna device for Rx. By positioning the elements at least 10 mm apart, preferably approximately 15 mm apart, the width of a finger should not cover both elements at the same time. By positioning the elements at most 30 mm apart, preferably 20 mm apart or approximately 15 mm apart, the space that the antenna device occupies in the portable radio communication device is kept low.

Since the elements are positioned relatively close to each other it is important to design the antennas for low coupling, so as to not reduce efficiency of the system.

The diversity radiating element 2 is preferably positioned at the side edge of the portable radio communication device 20, which is the most distanced from the part of the main radiating element 2 that exhibit the highest E-field.

When the antenna device is used for receiving GPS signals, the main radiating element 1 and the diversity radiating element 2 are preferably positioned at the front side and back side, respectively, of the portable radio communication device.

The main radiating element 1 is preferably arranged to be tuned 8 to the transmitting frequency band TX of an operating band of the antenna device, such as GSM900, and to partly match the corresponding receiving frequency band RX of the operating band of the antenna device. The diversity radiating element 2 is preferably arranged to be tuned 9 to partly match the corresponding receiving frequency band RX. For e.g. GSM900 the main radiating element 1 would receive strongest signals in the lower part of the receiving frequency band RX of the antenna device and the diversity radiating element 2 would receive strongest signals in the upper part of the receiving frequency band TX of the antenna device.

The part 8 of the receiving frequency band RX covered by the main radiating element 1 and the part 9 of the receiving frequency band RX covered by the diversity radiating element 2 are preferably distinct apart, i.e. utilizing a relaxed S₁₁ requirement to reduce the size of the antenna device. The total coverage of the receiving frequency band RX from the main radiating element 1 and the diversity radiating element 2 is thus not fulfilled, which however is compensated by the receiver diversity.

By being tuned to a frequency band is meant that the S₁₁ requirements for the antenna device is fulfilled for that frequency band.

Signals transmitted from the antenna device go through the main radiating element 1 via a transmitter circuit 4 and a duplexer 3. Signals received at the antenna device go through the main radiating element 1, the duplexer 3, and a receiver circuit 5 and is combined in a diversity combiner 7 with signals that go through the diversity radiating element 2 and its separate receiver circuit 6.

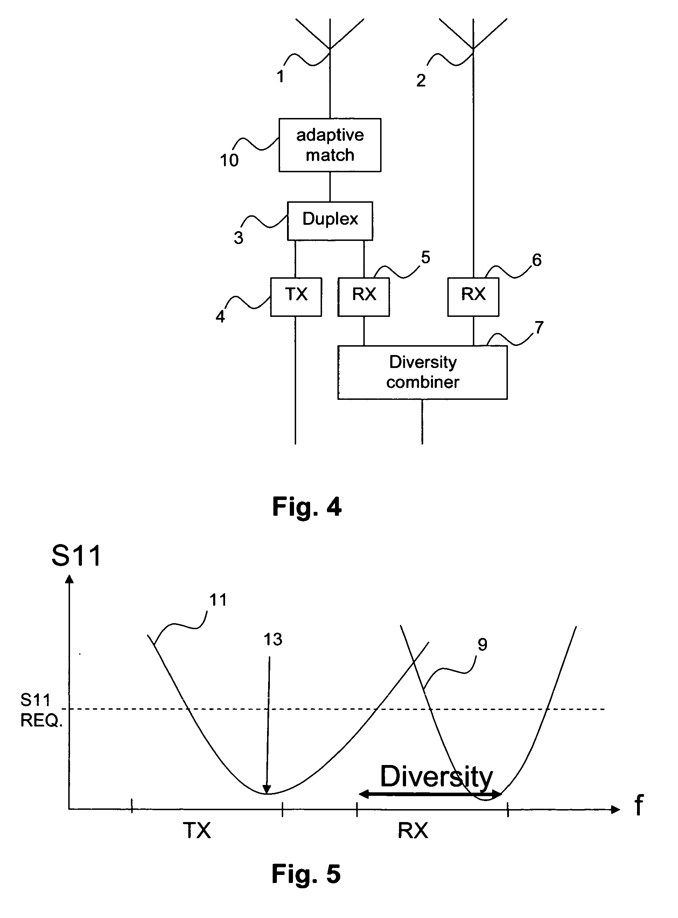

A second embodiment of the present invention will now be described with reference to Figs. 4-6. This second embodiment of the present invention is identical with the first embodiment described above, apart from the following. The main radiating element 1 is an active antenna element with adaptive matching 10, which adaptively tunes 11 the center 13 of the matching into the TX channel currently used, but which matching still partly covers the RX band.

Adaptive matching system for antennas uses a narrowband antenna element that is tuned to the specific channel used at the moment. Typically the tuning is optimized to the Tx channel, since it is straightforward to measure the matching for the Tx channel (reflected power meter). With only one antenna, it will be challenging to get the Rx performance in place. With a diversity receiving antenna the tuning of the Tx channel is more easy achieved by taking no or only little regard to the Rx channel for the main antenna, since this can be handled by the diversity receiving antenna.

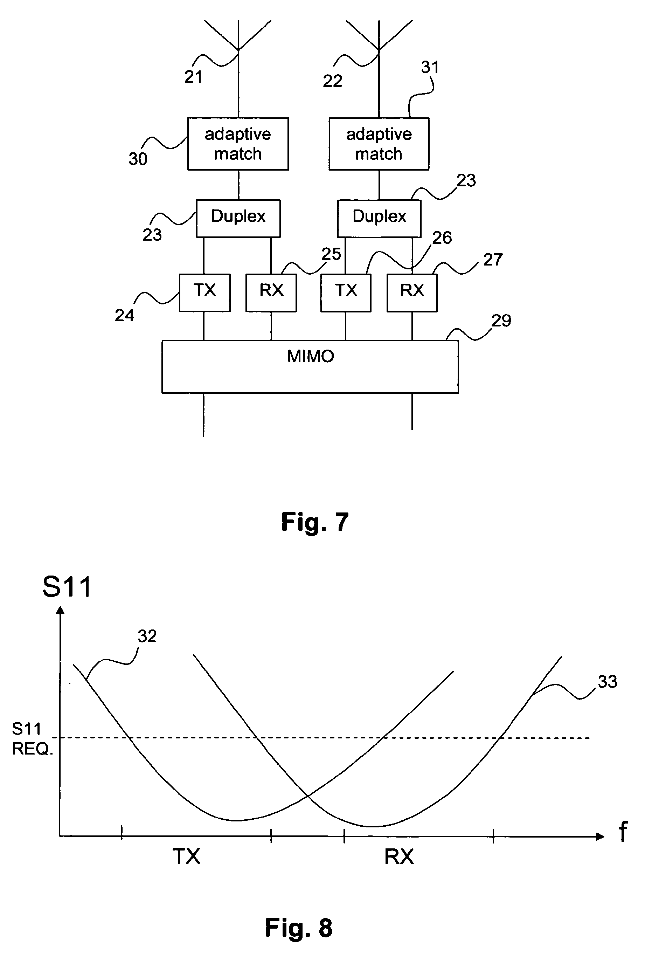

A third embodiment of the present invention will now be described with reference to Figs. 7-9. This third embodiment of the present invention is identical with the second embodiment described above apart from the following.

The main radiating element 21 is tuned 32 to part of a transmitting frequency band of the antenna device, sent from transmitter 24 and is tuned 32 to part of a receiving frequency band of the antenna device corresponding to the transmitting frequency band, received at receiver 25. The diversity radiating element 22 is tuned 33 to part of the transmitting frequency band of the antenna device, sent from transmitter 26 and is tuned 33 to part of the receiving frequency band of the antenna device corresponding to the transmitting frequency band, received at receiver 27. Signals to transmitters 24 and 26 are received from MIMO (Multiple In Multiple Out) device 29, and signals from receivers 25 and 27 are combined in MIMO device 29. Both the main radiating element, as well as the diversity radiating element, is in this case an active antenna element with adaptive matching 30 and 31, respectively. The adaptive matching 30 for the main radiating elements adaptively tunes the center of the matching into the TX channel currently used, and which matching still partly covers the RX band. The adaptive matching 31 for the diversity radiating elements adaptively tunes the center of the matching into the RX channel currently used, and which matching still partly covers the TX band.

Although a single operating band have been described above, the same principle with part of the receiving frequency band covered by a narrow band radiating element separate from the main radiating element covering part of the receiving frequency band and the transmitting band can be applied to multiple operating bands. The main radiating element would thus be tuned to TX for e.g. GSM900 and GSM1800 and partly tuned to RX for GSM900 and GSM1800, whereas the diversity radiating element would be partly tuned to RX for GSM900 and GS1800.

It will be obvious that the present invention may be varied in a plurality of ways. Such variations are not to be regarded as departure from the scope of the present invention as defined by the appended claims. All such variations as would be obvious for a person skilled in the art are intended to be included within the scope of the present invention as defined by the appended claims.

## Claims

1. An antenna device for a portable radio communication device (20), wherein said antenna device comprises a main radiating element (1; 21) and a diversity radiating element (2; 22), **characterized in that** said main antenna radiating element (1; 21) is configured to be positioned in a first position and said diversity radiating element (2; 22) is configured to be positioned in a second position of said portable radio communication device (20), wherein a user unlikely positions his fingers at the first and second positions at the same time.

2. The antenna device as claimed in claim 1, wherein said first and said second position are in the same half of said portable radio communication device (20).

3. The antenna device as claimed in claim 1 or 2, wherein said first position is along a top edge of said portable radio communication device, and said second position is along a side edge of said portable radio communication device.

4. The antenna device as claimed in any of claims 1-3, wherein said main radiating element (1) is tuned (8; 11) to a transmitting frequency band of said antenna device and is tuned (8; 11) to part of a receiving frequency band of said antenna device corresponding to said transmitting frequency band, and that said diversity radiating element is tuned (9) to part of said receiving frequency band.

5. The antenna device as claimed in any of claims 1-7, wherein said main radiating element (21) is tuned (32) to part of a transmitting frequency band of said antenna device and is tuned (32) to part of a receiving frequency band of said antenna device corresponding to said transmitting frequency band, and that said diversity radiating element (22) is tuned (33) to part of the transmitting frequency band of said antenna device and is tuned (33) to part of the receiving frequency band of said antenna device corresponding to said transmitting frequency band.

6. An antenna device as claimed in claim 4 or 5, wherein said part of a receiving frequency band of said main radiating element (1; 21) and said part of said receiving frequency band of said diversity radiating element (2; 22) are distinct apart in said receiving frequency band of said antenna device.

7. The antenna device as claimed in any of claims 4-6, wherein said main radiating element (1; 21) is tuned (11) such that it is centered (13) to the specific Tx channel in said transmitting frequency band of said antenna device.

8. The antenna device as claimed in claim 7, wherein said tuning (11; 32, 33) is arranged to be adaptively performed.

9. The antenna device as claimed in any of claims 1-8, wherein said main radiating element (1; 21) and said diversity radiating element (2; 22) are distanced from each other by at least 10 mm and at most 30 mm.

10. The antenna device as claimed in claim 9, wherein said main radiating element (1; 21) and said diversity radiating element (2; 22) are distanced from each other by at least 10 mm and at most 20 mm.

11. The antenna device as claimed in claim 10, wherein said main radiating element (1; 21) and said diversity radiating element (2; 22) are distanced from each other by approximately 15 mm.

12. A portable radio communication device **characterized in that** is comprises an antenna device as claimed in any of claims 1-11.
